# EUROPEAN PATENT APPLICATION

(11) **EP 3 623 194 A1**
(43) Date of publication of application: **18.03.2020**
(21) Application number: 19196442.8
(22) Date of filing: 10.09.2019
(51) Int. Cl.: B60K 1/04

(54) **VEHICLE**

(30) Priority: 12.09.2018 JP 2018170796
(71) Applicant: Honda Motor Co., Ltd., Tokyo 107-8556 (JP)
(72) Inventor: SUZUKI, Takanori, Wako-shi, Saitama 351-0193 (JP); OZAWA, Hiroyuki, Wako-shi, Saitama 351-0193 (JP)
(74) Representative: Weickmann & Weickmann PartmbB

(57) **Abstract**

A vehicle includes: a left front support portion to which a left front suspension supporting a left front wheel is fixed; a right front support portion to which a right front suspension supporting a right front wheel is fixed; a left rear support portion to which a left rear suspension supporting a left rear wheel is fixed; a right rear support portion to which a right rear suspension supporting a right rear wheel is fixed; a vehicle interior; and a battery provided below the vehicle interior with a floor panel therebetween. The battery is disposed such that a first intersection substantially coincides with a center of gravity of the battery in a top view. The first intersection is an intersection at which a first imaginary line intersects a second imaginary line.

## Description

### TECHNICAL FIELD

The present invention relates to a vehicle mounted with a battery.

### BACKGROUND ART

JP-A-2009-248708 discloses a technique in which the capacity of batteries mounted on a vehicle is increased by mounting some batteries below a vehicle interior with a floor panel therebetween in addition to mounting other batteries on a rear suspension.

Even in such a vehicle mounted with the batteries below the vehicle interior, it is required to suppress vibrations due to pitching, rolling and twisting of the vehicle to stabilize a vehicle behavior.

The present invention provides a vehicle capable of suppressing vibrations due to pitching, rolling and twisting.

### SUMMARY OF INVENTION

A vehicle related to a first aspect includes: a left front suspension support portion to which a left front suspension supporting a left front wheel is fixed; a right front suspension support portion to which a right front suspension supporting a right front wheel is fixed; a left rear suspension support portion to which a left rear suspension supporting a left rear wheel is fixed; a right rear suspension support portion to which a right rear suspension supporting a right rear wheel is fixed; a vehicle interior; and a battery provided below the vehicle interior with a floor panel therebetween. The battery is disposed such that a first intersection substantially coincides with a center of gravity of the battery in a top view, the first intersection being an intersection at which a first imaginary line connecting the left front suspension support portion with the right rear suspension support portion intersects a second imaginary line connecting the right front suspension support portion with the left rear suspension support portion.

A vehicle related to a second aspect includes: a left front wheel; a right front wheel; a left rear wheel; a right rear wheel; a vehicle interior; and a battery provided below the vehicle interior with a floor panel therebetween. The battery is disposed such that a second intersection substantially coincides with a center of gravity of the battery in a top view, the second intersection being an intersection at which a third imaginary line connecting a center of the left front wheel with a center of the right rear wheel intersects a fourth imaginary line connecting a center of the right front wheel with a center of the left rear wheel.

A vehicle related to a third aspect includes: a left front wheel; a right front wheel; a left rear wheel; a right rear wheel; a left front suspension support portion to which a left front suspension supporting the left front wheel is fixed; a right front suspension support portion to which a right front suspension supporting the right front wheel is fixed; a left rear suspension support portion to which a left rear suspension supporting the left rear wheel is fixed; a right rear suspension support portion to which a right rear suspension supporting the right rear wheel is fixed; a vehicle interior; and a battery provided below the vehicle interior with a floor panel therebetween. The battery is disposed such that a center of gravity of the battery is positioned between a first intersection and a second intersection in a front-rear direction of the vehicle in a top view, the first intersection being a point at which a first imaginary line connecting the left front suspension support portion with the right rear suspension support portion intersects a second imaginary line connecting the right front suspension support portion with the left rear suspension support portion, the second intersection being a point at which a third imaginary line connecting a center of the left front wheel with a center of the right rear wheel intersects a fourth imaginary line connecting a center of the right front wheel with a center of the left rear wheel.

According to the first to third aspects of the invention, vibrations due to pitching, rolling and twisting of the vehicle can be reduced by a vibration damping effect using a moment of inertia of the battery.

### BRIEF DESCRIPTION OF DRAWINGS

Fig. 1 is a schematic side view showing an overall structure of a vehicle according to an embodiment of the present invention;
Fig. 2 is a plan view showing an underfloor structure of the vehicle in Fig. 1;
Fig. 3 is a plan view showing an underfloor structure of a vehicle in a first modification;
Fig. 4 is a plan view showing an underfloor structure of a vehicle in a second modification; and
Fig. 5 is a plan view of a driving device unit of the vehicle in Fig. 1 and a periphery thereof.

### DESCRIPTION OF EMBODIMENTS

Hereinafter, a vehicle according to an embodiment of the present invention will be described with reference to the drawings. Incidentally, the drawings should be viewed based on a direction of reference numerals.

In the following description, front, rear, left, right, upper, and lower directions are described according a view from an operator. In the drawings, a front side of the vehicle is denoted by Fr, a rear side is denoted by Rr, a left side is denoted by L, a right side is denoted by R, an upper side is denoted by U, and a lower side is denoted by D.

### [Overall Structure of Vehicle]

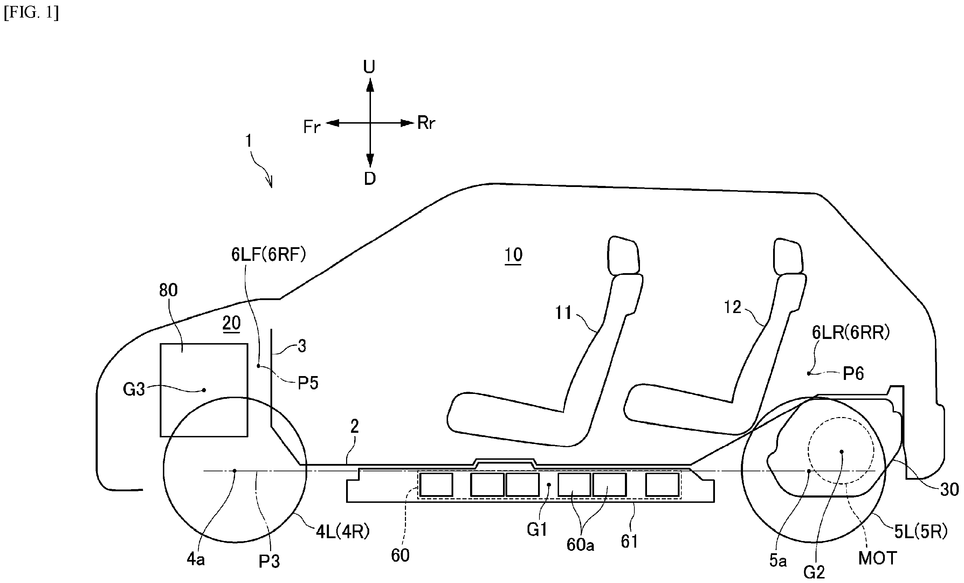

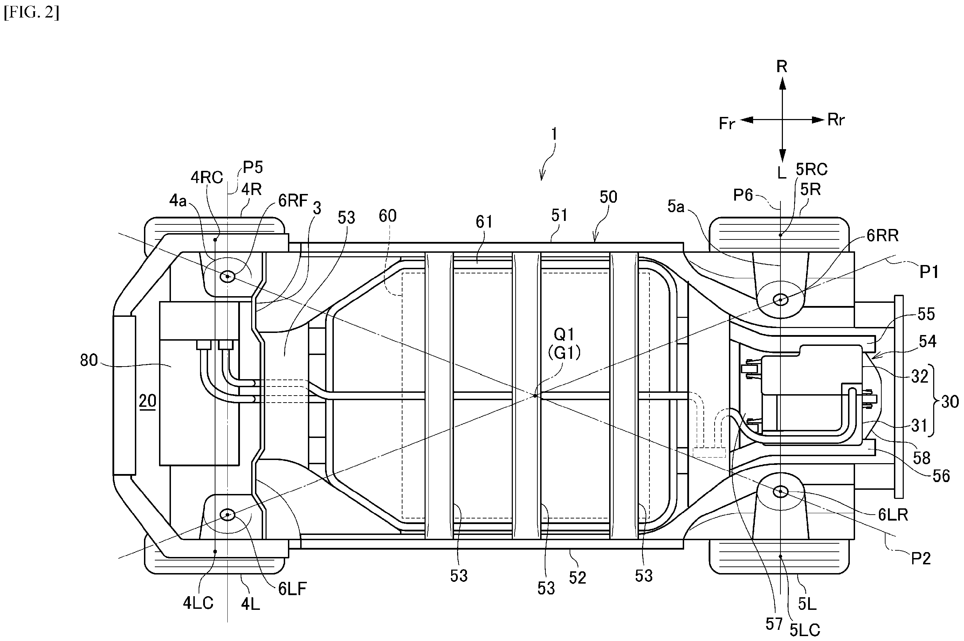

As shown in Figs. 1 and 2, a vehicle 1 according to an embodiment of the present invention is formed by a vehicle interior 10 and a front room 20 in front of the vehicle interior 10, which are defined by a floor panel 2 and a dash panel 3. Front seats 11 and rear seats 12 are provided in the vehicle interior 10. A driving device unit 30 is provided below the floor panel 2 behind the rear seat 12. The driving device unit 30 drives a left rear wheel 5L and a right rear wheel 5R. That is, in the vehicle 1, the left rear wheel 5L and the right rear wheel 5R are driving wheels, and a left front wheel 4L and a right front wheel 4R are driven wheels.

The left front wheel 4L is supported by a vehicle body frame 50 via a left front suspension (not shown) supported by a left front suspension support portion 6LF, and the right front wheel 4R is supported by the vehicle body frame 50 via a right front suspension (not shown) supported by a right front suspension support portion 6RF. The left rear wheel 5L is supported by the vehicle body frame 50 via a left rear suspension (not shown) supported by a left rear suspension support portion 6LR, and the right rear wheel 5R is supported by the vehicle body frame 50 via a right rear suspension (not shown) supported by a right rear suspension support portion 6RR.

A front wheel axle 4a connecting the left front wheel 4L with the right front wheel 4R is disposed forward compared to a fifth imaginary line P5 connecting the left front suspension support section 6LF with the right front suspension support section 6RF, and a rear wheel axle 5a connecting the left rear wheel 5L with the right rear wheel 5R is disposed on a sixth imaginary line P6 connecting the left rear suspension support portion 6LR with the right rear suspension support portion 6RR in a top view. Incidentally, the rear wheel axle 5a may be disposed forward compared to the sixth imaginary line P6. Accordingly, in a rear wheel driving vehicle, it is possible to suppress a change in posture regarding a forward torque input.

The vehicle body frame 50 includes a pair of left and right side members 51, 52 extending in a front-rear direction, a plurality of cross members 53 extending in a left-right direction and connecting the pair of side members 51, 52, and a sub-frame 54 having a rectangular shape so as to surround the driving device unit 30. The sub-frame 54 includes a pair of sub-side members 55, 56 supported by the pair of side members 51, 52, and a front frame member 57 and a rear frame member 58 that connect the pair of sub-side members 55, 56.

### [Driving Device Unit]

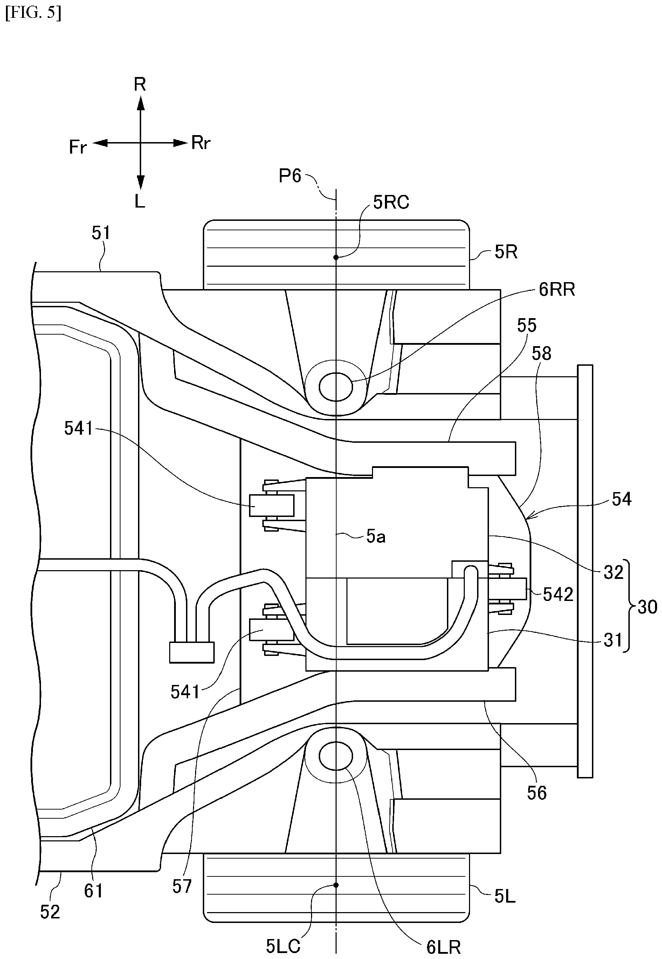

As shown in Fig. 5, the driving device unit 30 is fixed to a rear frame member 58 via a rear mounting portion 542, and is fixed to a front frame member 57 via a pair of front mounting portions 541. The driving device unit 30 includes a driving device 31 that accommodates a motor MOT as an electric motor and a Power Control Unit (PCU) 32 as an electric motor control unit that controls the motor MOT. The driving device 31 is provided with a transmission (not shown), and torque of the motor MOT is transmitted to a rear wheel axle 5a via the transmission, and is transmitted from the rear wheel axle 5a to the rear wheels 5L, 5R. The driving device 31 and the PCU 32 are arranged side by side in a width direction of the vehicle 1 in a top view.

Returning to Fig. 1, a center of gravity G2 of the driving device unit 30 is positioned above a third imaginary line P3 connecting the front wheel axle 4a with the rear wheel axle 5a. Although a rotational axis of the motor MOT is defined as the center of gravity G2 of the driving device unit 30 in Fig. 1, the center of gravity G2 of the driving device unit 30 may deviate from the rotational axis of the motor MOT in practice.

### [Electrical Device Unit]

An electrical device unit 80 is provided in the front room 20. The electrical device unit 80 includes a junction box, a charger, a DC-DC converter, and the like, and these electrical devices are accommodated in the front room 20 in a state of being held by an auxiliary frame (not shown).

The electrical device unit 80 is disposed such that a center of gravity G3 of the electrical device unit 80 is positioned forward compared to a fifth imaginary line P5 connecting the left front suspension support portion 6LF with the right front suspension support portion 6RF, and the driving device unit 30 is disposed such that the center of gravity G2 of the driving device unit 30 is positioned rearward compared to the sixth imaginary line P6 connecting the left rear suspension support portion 6LR with the right rear suspension support portion 6RR.

The electrical device unit 80 is disposed such that the center of gravity G3 of the electrical device unit 80 is positioned forward compared to the front wheel axle 4a, and the driving device unit 30 is disposed such that the center of gravity G2 of the driving device unit 30 is positioned rearward compared to the rear wheel axle 5a.

As described above, by setting the center of gravity G3 of the electrical device unit 80 and the center of gravity G2 of the driving device unit 30, vehicle weight distribution in the front side and the rear side becomes uniform, and the behavior characteristic of the vehicle 1 is improved.

### [Battery]

A battery 60 including a plurality of battery modules 60a is disposed below the vehicle interior 10. The battery 60 is accommodated in a battery case 61 and disposed below the floor panel 2. That is, the electrical device unit 80, the battery 60, and the driving device unit 30 are arranged in this order from the front of the vehicle 1. The weight of the battery 60 is heavier than the weight of the electrical device unit 80 and is heavier than the weight of the driving device unit 30.

As shown in Fig. 2, if a line connecting the left front suspension support portion 6LF with the right rear suspension support portion 6RR in the top view is defined as a first imaginary line P1, a line connecting the right front suspension support portion 6RF with the left rear suspension support portion 6LR is defined as a second imaginary line P2, and a point at which the first imaginary line P1 intersects the second imaginary line P2 is defined as a first intersection Q1, the battery 60 is disposed such that the first intersection Q1 substantially coincides with a center of gravity G1 of the battery 60 in the top view. The term "substantially coincide" is not limited to a case where the first intersection Q1 completely coincides with the center of gravity G1 of the battery 60, but also includes a case where the first intersection Q1 deviates from the center of gravity G1 of the battery 60 by a predetermined distance. The predetermined distance is the longer one of a distance between the front wheel axle 4a and the fifth imaginary line P5 and a distance between the rear wheel axle 5a and the sixth imaginary line P6.

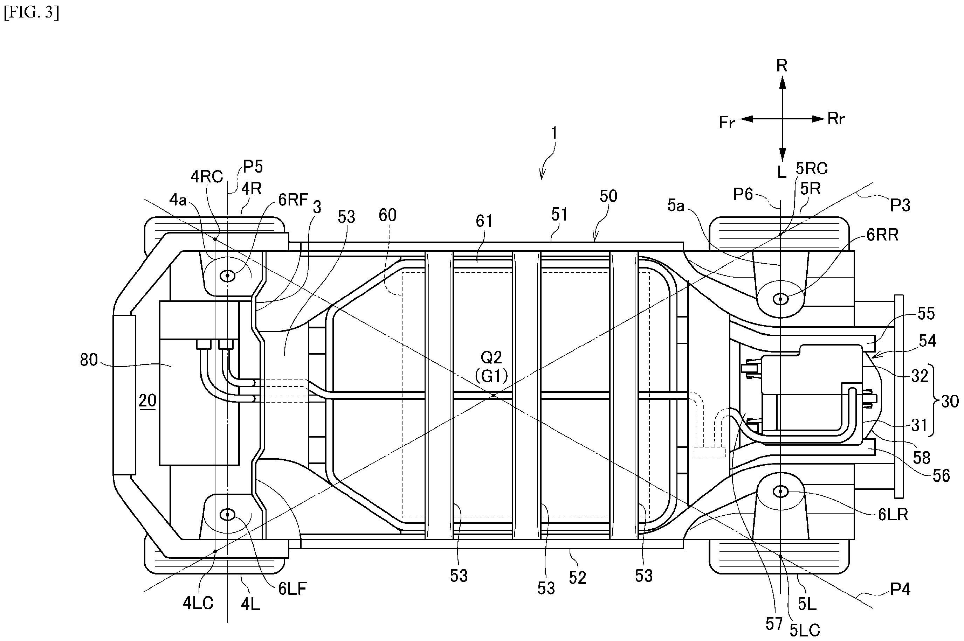

Further, as shown in Fig. 3, in a top view, if a line connecting a center 4LC of the left front wheel 4L with a center 5RC of the right rear wheel 5R is defined as a third imaginary line P3, a line connecting a center 4RC of the right front wheel 4R with a center 5LC of the left rear wheel 5L is defined as a fourth imaginary line P4, and a point at which the third imaginary line P3 intersects the fourth imaginary line P4 is defined as a second intersection Q2, the battery 60 may be disposed such that the second intersection Q2 substantially coincides with the center of gravity G1 of the battery 60. The respective centers 4LC, 4RC of the front wheels 4L, 4R are on the front wheel axle 4a and at central portions in the width direction of tires in the top view, and the respective centers 5LC, 5RC of the rear wheels 5L, 5R are on the rear wheel axle 5a and at central portions in the width direction of tires in the top view. The term "substantially coincide" is not limited to a case where the second intersection Q2 completely coincides with the center of gravity G1 of the battery 60, but also includes a case where the second intersection Q2 deviates from the center of gravity G1 of the battery 60 by a predetermined distance. The predetermined distance is the longer one of a distance between the front wheel axle 4a and the fifth imaginary line P5 and a distance between the rear wheel axle 5a and the sixth imaginary line P6.

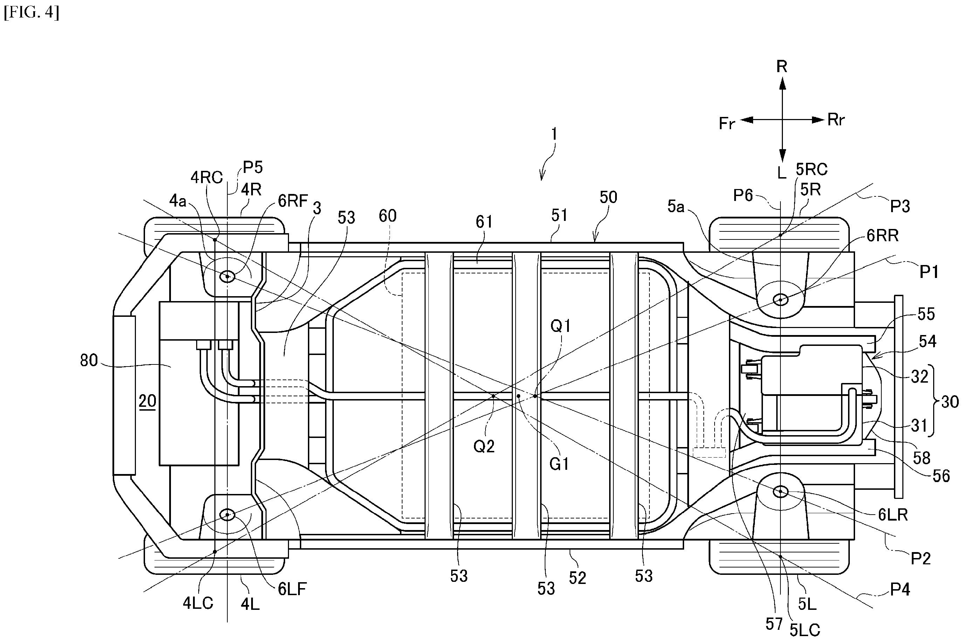

As shown in Fig. 4, the battery 60 may be disposed such that the center of gravity G1 of the battery 60 is positioned between the first intersection Q1 and the second intersection Q2 in the front-rear direction of the vehicle 1 in the top view.

By setting the center of gravity G1 of the battery 60 as shown in Figs. 2 to 4, vibrations due to pitching, rolling and twisting of the vehicle 1 can be reduced by a vibration damping effect using a moment of inertia of the battery 60.

The battery 60 is disposed such that the center of gravity G1 of the battery 60 is at a position lower than positions of the front wheel axle 4a and the rear wheel axle 5a. Accordingly, the position of the center of gravity of the vehicle 1 is lowered, and the vehicle behavior at the time of acceleration and deceleration is stabilized.

The center of gravity G3 of the electrical device unit 80 is positioned above the center of gravity G2 of the driving device unit 30 and the center of gravity G1 of the battery 60. In addition to the lowering of the position of the center of gravity by disposing the battery 60 under the floor, by tilting a roll shaft slightly rearward, relative displacement between an occupant and a vehicle body at the time of steering can be suppressed to enable natural turning. Further, a load can be securely applied to the rear wheels 5L, 5R at the time of acceleration.

Further, since the battery 60 is disposed rearward compared to the front wheel axle 4a and forward compared to the rear wheel axle 5a, and the weight of the battery 60 is heavier than the weight of the electrical device unit 80 and is heavier than the weight of the driving device unit 30, by disposing the heaviest at the lowest position between the front and rear wheels, the behavior stability of the vehicle 1 is improved.

The vehicle 1 is provided with a cross member 53 at a position overlapping the center of gravity G1 of the battery 60. Accordingly, the battery 60 disposed under the floor can be stably held against acceleration acting at the time of sudden acceleration and turning of the vehicle 1 while collision strength in a vehicle width direction is secured.

The above-described embodiment may be appropriately modified, improved, or the like.

At least the following matters are described in this specification. Corresponding components or the like in the above-described embodiment are shown in parentheses, but the present invention is not limited thereto.
(1) A vehicle (vehicle 1) includes:
   a left front suspension support portion (left front suspension support portion 6LF) to which a left front suspension supporting a left front wheel (left front wheel 4L) is fixed;
   a right front suspension support portion (right front suspension support portion 6RF) to which a right front suspension supporting a right front wheel (right front wheel 4R) is fixed;
   a left rear suspension support portion (left rear suspension support portion 6LR) to which a left rear suspension supporting a left rear wheel (left rear wheel 5L) is fixed;
   a right rear suspension support portion (right rear suspension support portion 6RR) to which a right rear suspension supporting a right rear wheel (right rear wheel 5R) is fixed;
   a vehicle interior (vehicle interior 10); and
   a battery (battery 60) provided below the vehicle interior with a floor panel (floor panel 2) therebetween,
   wherein the battery is disposed such that a first intersection (first intersection Q1) substantially coincides with a center of gravity (center of gravity G1) of the battery in a top view, the first intersection being an intersection at which a first imaginary line (first imaginary line P1) connecting the left front suspension support portion with the right rear suspension support portion intersects a second imaginary line (second imaginary line P2) connecting the right front suspension support portion with the left rear suspension support portion.
   According to (1), by making the center of gravity of the battery, which is a heavy object, substantially coincide with the first intersection, vibrations due to pitching, rolling and twisting of the vehicle can be reduced by a vibration damping effect using a moment of inertia of the battery.
(2) A vehicle (vehicle 1) includes:
   a left front wheel (left front wheel 4L);
   a right front wheel (right front wheel 4R);
   a left rear wheel (left rear wheel 5L);
   a right rear wheel (right rear wheel 5R);
   a vehicle interior (vehicle interior 10); and
   a battery (battery 60) provided below the vehicle interior with a floor panel (floor panel 2) therebetween,
   wherein the battery is disposed such that a second intersection (second intersection Q2) substantially coincides with a center of gravity (center of gravity G1) of the battery in a top view, the second intersection being an intersection at which a third imaginary line (third imaginary line P3) connecting a center (center 4LC) of the left front wheel with a center (center 5RC) of the right rear wheel intersects a fourth imaginary line (fourth imaginary line P4) connecting a center (center 5LC) of the right front wheel with a center (center 4RC) of the left rear wheel.
   According to (2), by making the center of gravity of the battery, which is a heavy object, substantially coincide with the second intersection, vibrations due to pitching, rolling and twisting of the vehicle can be reduced by a vibration damping effect using a moment of inertia of the battery.
(3) A vehicle (vehicle 1) includes:
   a left front wheel (left front wheel 4L);
   a right front wheel (right front wheel 4R);
   a left rear wheel (left rear wheel 5L);
   a right rear wheel (right rear wheel 5R);
   a left front suspension support portion (left front suspension support portion 6LF) to which a left front suspension supporting the left front wheel is fixed;
   a right front suspension support portion (right front suspension support portion 6RF) to which a right front suspension supporting the right front wheel is fixed;
   a left rear suspension support portion (left rear suspension support portion 6LR) to which a left rear suspension supporting the left rear wheel is fixed;
   a right rear suspension support portion (right rear suspension support portion 6RR) to which a right rear suspension supporting the right rear wheel is fixed;
   a vehicle interior (vehicle interior 10); and
   a battery (battery 60) provided below the vehicle interior with a floor panel (floor panel 2) therebetween,
   wherein the battery is disposed such that a center of gravity (center of gravity G1) of the battery is positioned between a first intersection (first intersection Q1) and a second intersection (second intersection Q2) in a front-rear direction of the vehicle in a top view, the first intersection being a point at which a first imaginary line (first imaginary line P1) connecting the left front suspension support portion with the right rear suspension support portion intersects a second imaginary line (second imaginary line P2) connecting the right front suspension support portion with the left rear suspension support portion, the second intersection being a point at which a third imaginary line (third imaginary line P3) connecting a center (center 4LC) of the left front wheel with a center (center 5RC) of the right rear wheel intersects a fourth imaginary line (fourth imaginary line P4) connecting a center (center 4RC) of the right front wheel with a center (center 5LC) of the left rear wheel.
   According to (3), by making the center of gravity of the battery, which is a heavy object, substantially coincide with the second intersection, vibrations due to pitching, rolling and twisting of the vehicle can be reduced by a vibration damping effect using a moment of inertia of the battery.
(4) In the vehicle according to (3),
   the center of gravity of the battery is at a position lower than positions of a front wheel axle connecting the left front wheel with the right front wheel and a rear wheel axle connecting the left rear wheel with the right rear wheel in a side view.
   According to (4), the position of the center of gravity of the vehicle is lowered, and the vehicle behavior at the time of acceleration and deceleration is stabilized.
(5) In the vehicle according to any one of (1), (3) and (4),
   the left rear wheel and the right rear wheel are driving wheels,
   the left front wheel and the right front wheel are driven wheels,
   a front wheel axle (front wheel axle 4a) connecting the left front wheel with the right front wheel is disposed forward compared to a fifth imaginary line (fifth imaginary line P5) connecting the left front suspension support portion with the right front suspension support portion, and
   a rear wheel axle (rear wheel axle 5a) connecting the left rear wheel with the right rear wheel is disposed on or forward compared to a sixth imaginary line (sixth imaginary line P6) connecting the left rear suspension support portion with the right rear suspension support portion.
   According to (5), in a rear wheel driving vehicle, it is possible to suppress a change in posture regarding a forward torque input.
(6) In the vehicle according to any one of (1), (3) to (5),
   a first electrical device (electrical device unit 80) is disposed in a front room (front room 20) provided in front of the vehicle interior,
   a second electrical device (driving device unit 30) is disposed behind the battery,
   the first electrical device is disposed such that a center of gravity (center of gravity G3) of the first electrical device is positioned forward compared to a fifth imaginary line (fifth imaginary line P5) connecting the left front suspension support portion with the right front suspension support portion, and
   the second electrical device is disposed such that a center of gravity (center of gravity G2) of the second electrical device is positioned rearward compared to a sixth imaginary line (sixth imaginary line P6) connecting the left rear suspension support portion with the right rear suspension support portion.
   According to (6), a vehicle weight distribution in the front side and the rear side becomes uniform, and a behavior characteristic of the vehicle is improved.
(7) In the vehicle according to any one of (2) to (5),
   a first electrical device (electrical device unit 80) is disposed in a front room (front room 20) provided in front of the vehicle interior,
   a second electrical device (driving device unit 30) is disposed behind the battery,
   the first electrical device is disposed such that a center of gravity (center of gravity G3) of the first electrical device is positioned forward compared to a front wheel axle (front wheel axle 4a) connecting the left front wheel with the right front wheel, and
   the second electrical device is disposed such that a center of gravity (center of gravity G2) of the second electrical device is positioned rearward compared to a rear wheel axle (rear wheel axle 5a) connecting the left rear wheel with the right rear wheel.
   According to (7), a vehicle weight distribution in the front side and the rear side becomes uniform, and a behavior characteristic of the vehicle is improved.
(8) In the vehicle according to (6) or (7),
   the battery is disposed rearward compared to a front wheel axle (front wheel axle 4a) connecting the left front wheel with the right front wheel, and forward compared to a rear wheel axle (rear wheel axle 5a) connecting the left rear wheel with the right rear wheel, and
   the weight of the battery is heavier than the weight of the first electrical device and is heavier than the weight of the second electrical device.
   According to (8), by disposing the heaviest at the lowest position between the front and rear wheels, the behavior stability of the vehicle is improved.
(9) In the vehicle according to any one of (1) to (8),
   a cross member (cross member 53) is provided at a position overlapping a center of gravity of the battery in a top view.

According to (9), the battery disposed under a floor can be stably held against acceleration acting at the time of sudden acceleration and turning of the vehicle while collision strength in a vehicle width direction is secured.

A vehicle includes: a left front support portion to which a left front suspension supporting a left front wheel is fixed; a right front support portion to which a right front suspension supporting a right front wheel is fixed; a left rear support portion to which a left rear suspension supporting a left rear wheel is fixed; a right rear support portion to which a right rear suspension supporting a right rear wheel is fixed; a vehicle interior; and a battery provided below the vehicle interior with a floor panel therebetween. The battery is disposed such that a first intersection substantially coincides with a center of gravity of the battery in a top view. The first intersection is an intersection at which a first imaginary line intersects a second imaginary line.

## Claims

1. A vehicle comprising:
a left front suspension support portion to which a left front suspension supporting a left front wheel is fixed;
a right front suspension support portion to which a right front suspension supporting a right front wheel is fixed;
a left rear suspension support portion to which a left rear suspension supporting a left rear wheel is fixed;
a right rear suspension support portion to which a right rear suspension supporting a right rear wheel is fixed;
a vehicle interior; and
a battery provided below the vehicle interior with a floor panel therebetween,
wherein the battery is disposed such that a first intersection substantially coincides with a center of gravity of the battery in a top view, the first intersection being an intersection at which a first imaginary line connecting the left front suspension support portion with the right rear suspension support portion intersects a second imaginary line connecting the right front suspension support portion with the left rear suspension support portion.

2. A vehicle comprising:
a left front wheel;
a right front wheel;
a left rear wheel;
a right rear wheel;
a vehicle interior; and
a battery provided below the vehicle interior with a floor panel therebetween,
wherein the battery is disposed such that a second intersection substantially coincides with a center of gravity of the battery in a top view, the second intersection being an intersection at which a third imaginary line connecting a center of the left front wheel with a center of the right rear wheel intersects a fourth imaginary line connecting a center of the right front wheel with a center of the left rear wheel.

3. A vehicle comprising:
a left front wheel;
a right front wheel;
a left rear wheel;
a right rear wheel;
a left front suspension support portion to which a left front suspension supporting the left front wheel is fixed;
a right front suspension support portion to which a right front suspension supporting the right front wheel is fixed;
a left rear suspension support portion to which a left rear suspension supporting the left rear wheel is fixed;
a right rear suspension support portion to which a right rear suspension supporting the right rear wheel is fixed;
a vehicle interior; and
a battery provided below the vehicle interior with a floor panel therebetween,
wherein the battery is disposed such that a center of gravity of the battery is positioned between a first intersection and a second intersection in a front-rear direction of the vehicle in a top view, the first intersection being a point at which a first imaginary line connecting the left front suspension support portion with the right rear suspension support portion intersects a second imaginary line connecting the right front suspension support portion with the left rear suspension support portion, the second intersection being a point at which a third imaginary line connecting a center of the left front wheel with a center of the right rear wheel intersects a fourth imaginary line connecting a center of the right front wheel with a center of the left rear wheel.

4. The vehicle according to claim 3,
wherein, in a side view, the center of gravity of the battery is at a position lower than positions of a front wheel axle connecting the left front wheel with the right front wheel and a rear wheel axle connecting the left rear wheel with the right rear wheel.

5. The vehicle according to any one of claims 1, 3 and 4, wherein
the left rear wheel and the right rear wheel are driving wheels,
the left front wheel and the right front wheel are driven wheels,
a front wheel axle connecting the left front wheel with the right front wheel is disposed forward compared to a fifth imaginary line connecting the left front suspension support portion with the right front suspension support portion, and
a rear wheel axle connecting the left rear wheel with the right rear wheel is disposed on or forward compared to a sixth imaginary line connecting the left rear suspension support portion with the right rear suspension support portion.

6. The vehicle according to any one of claims 1 and 3 to 5, wherein
a first electrical device is disposed in a front room provided in front of the vehicle interior,
a second electrical device is disposed behind the battery,
the first electrical device is disposed such that a center of gravity of the first electrical device is positioned forward compared to a fifth imaginary line connecting the left front suspension support portion with the right front suspension support portion, and
the second electrical device is disposed such that a center of gravity of the second electrical device is positioned rearward compared to a sixth imaginary line connecting the left rear suspension support portion with the right rear suspension support portion.

7. The vehicle according to any one of claims 2 to 5, wherein
a first electrical device is disposed in a front room provided in front of the vehicle interior,
a second electrical device is disposed behind the battery,
the first electrical device is disposed such that a center of gravity of the first electrical device is positioned forward compared to a front wheel axle connecting the left front wheel with the right front wheel, and
the second electrical device is disposed such that a center of gravity of the second electrical device is positioned rearward compared to a rear wheel axle connecting the left rear wheel with the right rear wheel.

8. The vehicle according to claim 6 or 7, wherein
the battery is disposed rearward compared to a front wheel axle connecting the left front wheel with the right front wheel, and forward compared to a rear wheel axle connecting the left rear wheel and the right rear wheel, and
the weight of the battery is heavier than the weight of the first electrical device and is heavier than the weight of the second electrical device.

9. The vehicle according to any one of claims 1 to 8,
wherein a cross member is provided at a position overlapping a center of gravity of the battery in a top view.
